# FASCICULE DE BREVET EUROPEEN

(11) **EP 4 034 429 B1**
(45) Date de publication et mention de la délivrance du brevet: **02.07.2025**
(21) Numéro de dépôt: 20780656.3
(22) Date de dépôt: 24.09.2020
(51) Int. Cl.: B60R 13/02, E05B 83/18

(54) **DISPOSITIF D'ENJOLIVEUR POUR OUVRANT DE VÉHICULE AUTOMOBILE**
ABDECKVORRICHTUNG FÜR EINE ÖFFNUNGSPLATTE EINES KRAFTFAHRZEUGES
COVER DEVICE FOR AN OPENING PANEL OF A MOTOR VEHICLE

(30) Priorité: 24.09.2019 FR 1910502
(43) Date de publication de la demande: 03.08.2022
(73) Titulaire: Renault S.A.S., 92100 Boulogne-Billancourt (FR)
(72) Inventeur: SEIGNEUR, Quentin, 78000 FOCH (FR)
(74) Mandataire: Renault Group
(86) Numéro de dépôt international: PCT/EP2020/076680
(87) Numéro de publication internationale: WO 2021/058633

(56) Documents cités:
- EP-A1- 1 074 680
- CN-U- 207 984 741
- DE-A1- 102011 121 592
- JP-A- 2005 054 530
- US-A1- 2011 278 867
- US-A1- 2014 327 250

## Description

L'invention concerne un ouvrant pour véhicule automobile comprenant un dispositif d'enjoliveur. L'invention porte encore sur une caisse pour véhicule automobile comprenant un tel ouvrant. L'invention porte enfin sur un véhicule automobile comprenant un tel ouvrant et/ou une telle caisse.

Un ouvrant de véhicule automobile présente une serrure destinée à coopérer avec une gâche prévue sur la structure de caisse d'un véhicule afin de permettre de maintenir l'ouvrant fermé et de permettre son ouverture lors de l'action d'un utilisateur. En particulier sur les ouvrants de type porte de coffre ou hayons, les serrures sont très saillantes relativement aux formes globales des ouvrants. Par ailleurs, les serrures sont réalisées à l'aide de pièces métalliques pouvant présenter des arêtes vives et/ou avec des pièces métalliques lubrifiées et donc grasses. Pour ces raisons et aussi pour des raisons esthétiques, il apparaît nécessaire de masquer les serrures en les recouvrant d'un habillage ou enjoliveur.

Par ailleurs, certaines structures de hayons ou de portes de coffres sont réalisées en plusieurs pièces principales assemblées. Par exemple, une pièce de structure apportant la rigidité à l'ouvrant, comme un caisson, est assemblée à une pièce d'habillage ou de finition comme un panneau extérieur formant une partie visible de carrosserie. Ces assemblages peuvent être réalisés de manières variées. Toutefois, ces assemblages sont souvent réalisées au niveau de zones qu'il est ensuite nécessaire de masquer pour des raisons esthétiques.

Ces multiples opérations de masquage sont génératrices de coûts.

Le but de l'invention est de fournir un dispositif d'enjoliveur pour ouvrant de véhicule automobile remédiant aux inconvénients ci-dessus et améliorant les guides connus de l'art antérieur. En particulier, l'invention permet de réaliser un dispositif d'enjoliveur simple et économique. CN207984741U, le plus proche état de la technique, divulgue un ouvrant pour un véhicule automobile, comprenant un dispositif d'enjoliveur pour ouvrant de véhicule automobile, le dispositif d'enjoliveur comprenant un premier enjoliveur pour une serrure d'un ouvrant et un deuxième enjoliveur pour un système de fixation d'un élément d'un ouvrant le premier enjoliveur et le deuxième enjoliveur formant une seule et même pièce.

Selon l'invention, un ouvrant de véhicule automobile comprend un dispositif d'enjoliveur pour ouvrant de véhicule automobile. Le dispositif d'enjoliveur comprend un premier enjoliveur pour une serrure d'un ouvrant et un deuxième enjoliveur pour un système de fixation d'un premier élément d'un ouvrant à un deuxième élément d'un ouvrant, le premier enjoliveur et le deuxième enjoliveur formant une seule et même pièce. Le dispositif d'enjoliveur peut être réalisé par injection et/ou être réalisé en matière plastique ou en matière composite.

Le premier élément est une pièce de structure d'un ouvrant, notamment un caisson d'un ouvrant, et/ou le deuxième élément est une pièce d'habillage d'un ouvrant, notamment un panneau extérieur d'un ouvrant.

Le dispositif peut comprendre des éléments de fixation, notamment des clips de fixation.

Le premier enjoliveur peut avoir une forme globale de parallélépipède creux muni d'une fente et/ou le deuxième enjoliveur peut avoir une forme globale de réglette.

Le dispositif peut comprendre une interface, notamment une interface plane ou sensiblement plane, de liaison mécanique du premier enjoliveur au deuxième enjoliveur.

L'ouvrant peut comprendre un élément d'ouvrant présentant une zone en creux destinée à recevoir le dispositif d'enjoliveur.

Selon l'invention, une caisse pour véhicule automobile comprend un ouvrant défini précédemment.

Selon l'invention, un véhicule, notamment véhicule automobile, comprend une caisse définie précédemment et/ou un ouvrant défini précédemment.

Le dessin annexé représente, à titre d'exemple, un mode de réalisation d'un véhicule automobile selon l'invention et un mode d'exécution d'un dispositif d'enjoliveur selon l'invention.
[Fig. 1] La figure 1 représente un véhicule automobile équipé d'un dispositif d'enjoliveur.
[Fig. 2] La figure 2 est une vue plus détaillée d'un dispositif d'enjoliveur.
[Fig. 3] La figure 3 est une vue de détail en perspective de l'ouvrant sans dispositif d'enjoliveur.
[Fig. 4] La figure 4 est une vue en coupe partielle verticale et longitudinale d'un ouvrant au niveau d'un dispositif d'enjoliveur.

Dans tout ce document, on appelle X la direction longitudinale ou l'axe longitudinal du véhicule, c'est-à-dire la direction ou l'axe selon lequel le véhicule se déplace habituellement en ligne droite. On appelle Y la direction transversale du véhicule ou un axe transversal au véhicule. On appelle Z une direction sensiblement verticale ou un axe sensiblement vertical, perpendiculaire au plan X-Y. La direction X ou l'axe X est orienté de l'avant vers l'arrière du véhicule. L'axe Z est orienté verticalement vers le haut. L'axe Y est orienté de sorte que le repère X-Y-Z soit direct.

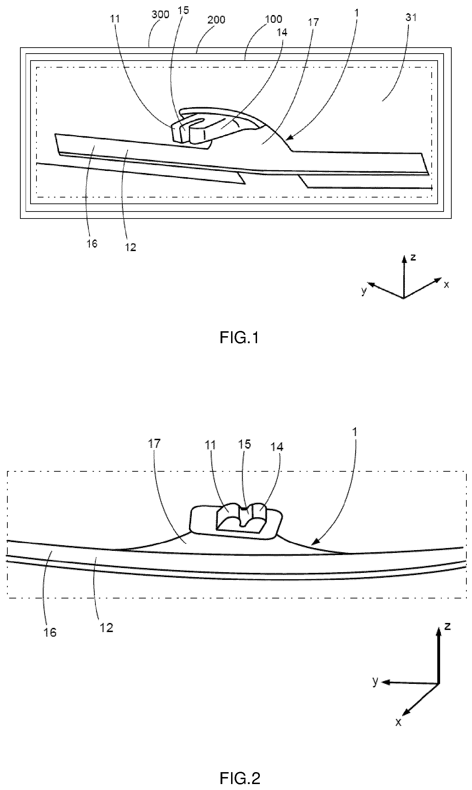

Un mode de réalisation d'un véhicule automobile 300 selon l'invention est décrit ci-après en référence aux figures 1 à 4. Le véhicule automobile 300 peut être de toute nature, comme un véhicule de tourisme ou un véhicule utilitaire.

Le véhicule automobile comprend une caisse 200 munie d'un ou plusieurs ouvrants ou portes 100 permettant notamment à des utilisateurs d'accéder dans l'habitacle ou de charger l'habitacle du véhicule, puis de fermer l'habitacle.

Un mode de réalisation d'un ouvrant 100 est décrit plus en détail en référence aux figures 2 à 4. L'ouvrant est par exemple un hayon ou une porte de coffre. Sur les figures, l'ouvrant est représenté dans sa position de fermeture.

L'ouvrant est réalisé en plusieurs pièces principales assemblées. L'ouvrant comprend ainsi principalement :
- un premier élément 31 consistant par exemple en un caisson et constituant principalement la structure rigide de l'ouvrant, et
- un deuxième élément 32, notamment un panneau extérieur formant une partie visible de carrosserie et constituant une pièce d'habillage ou de finition.

Le premier élément 31 est de préférence réalisé en matière plastique de sorte que sa partie inférieure reste visible et constitue ainsi la garniture de l'ouvrant.

Le premier élément 31 comprend par exemple un anneau de rigidification (ayant un profil de section creux) réalisé par injection d'un fluide sous pression : le bord inférieur 34 du caisson comprend une échancrure ou découpe 35 permettant un positionnement de l'outillage de réalisation de l'anneau.

Le premier élément 31 comprend aussi au niveau de son bord inférieur 34 ou à proximité de son bord inférieur des éléments 22, 23, 33 de fixation d'un système de fixation du premier élément d'ouvrant au deuxième élément d'ouvrant.

Les éléments de fixation comprennent par exemple des trous 22 réalisés dans le premier élément 31. Ces trous peuvent être réalisés sur des bossages 23 prévus sur le premier élément 31. Avantageusement, ces trous et/ou ces bossages sont réalisés au fond d'une zone en creux 33 pratiquée sur une face intérieure du premier élément 31. Les éléments de fixation comprennent avantageusement des vis ou des rivets ou tout autre moyen permettant de fixer le deuxième élément 32 sur le premier élément 31. Par exemple, les vis ou rivet passent au travers des trous 22 et se logent dans le deuxième élément 32.

Les éléments de fixation du deuxième élément 32 sur le premier élément 31 sont avantageusement tous localisés à proximité du bord inférieur 34 de l'ouvrant et à proximité de la serrure 21 de l'ouvrant. Cette localisation est avantageuse car elle est peu visible, et cela même lorsque l'ouvrant est ouvert.

Pour des raisons esthétiques, le système de fixation est avantageusement masqué après avoir été configuré dans un état de fixation du deuxième élément 32 sur le premier élément 31.

Le deuxième élément 32 est par exemple un panneau extérieur de carrosserie. Il est par exemple réalisé en matière plastique.

L'ouvrant 100 comprend en outre un mode de réalisation d'un dispositif d'enjoliveur 1.

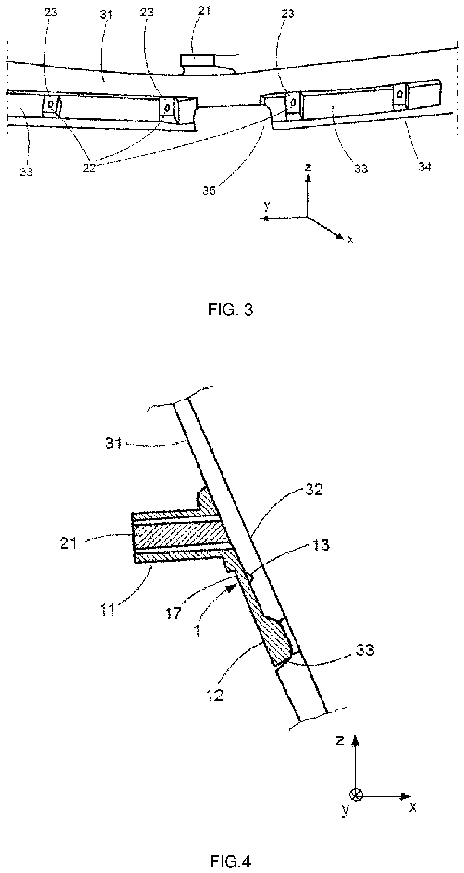

Ce dispositif d'enjoliveur 1 est décrit plus en détail en référence aux figures 2 et 4.

Le dispositif 1 d'enjoliveur pour ouvrant 100 de véhicule automobile, comprend :
- un premier enjoliveur 11 de serrure 21 de l'ouvrant, et
- un deuxième enjoliveur 12 du système de fixation 22 du premier élément 31 d'ouvrant au deuxième élément 32 d'ouvrant.

Le premier enjoliveur est destiné à masquer et/ou recouvrir la serrure pour des raisons esthétiques et/ou pour des raisons d'hygiène et de sécurité. Par exemple, le premier enjoliveur a une forme globale de parallélépipède creux 14 muni d'un fente 15 prévu pour le passage d'un élément d'une gâche.

Le deuxième enjoliveur est destiné à masquer et/ou recouvrir le système de fixation du deuxième élément 32 sur le premier élément 31 pour des raisons esthétiques. Par exemple, le deuxième enjoliveur a une forme globale de réglette 16. Ainsi, le deuxième enjoliveur a globalement une forme de profilé à section rectangulaire dont le plus grand côté est orienté verticalement (c'est-à-dire selon l'axe Z). Le profilé s'étend globalement selon la direction Y. Avantageusement, le deuxième enjoliveur est agencé de sorte à se loger dans la zone en creux prévu sur le premier élément 31.

Le premier enjoliveur 11 et le deuxième enjoliveur 12 forment une seule et même pièce. De préférence, le système d'enjoliveur est monobloc. Par exemple, le dispositif d'enjoliveur peut être obtenu par moulage, notamment par injection d'une matière plastique, notamment un copolymère de type éthylène / propylène tel que par exemple du P/E TD10, ou d'une matière composite. Alternativement, le premier enjoliveur peut être rapporté sur le deuxième enjoliveur. Le premier enjoliveur et le deuxième enjoliveur peuvent être liés mécaniquement l'un à l'autre par une liaison mécanique de fixation ou d'encastrement, la liaison étant démontable ou non démontable.

Le dispositif d'enjoliveur comprend de préférence une interface 17, notamment une interface plane ou sensiblement plane, reliant mécaniquement le premier enjoliveur et le deuxième enjoliveur l'un à l'autre. Cette interface peut avoir une forme de plaque trapézoïdale dont une petite base est liée ou raccordée au premier enjoliveur et dont une grande base est liée ou raccordée au deuxième enjoliveur.

Le dispositif 1 comprend de préférence des éléments de fixation 13, notamment des clips de fixation. Ces éléments de fixation sont destinés à coopérer avec des éléments de fixation prévus sur le reste de l'ouvrant, notamment des trous, en particulier des trous prévus sur le premier élément 31, pour fixer le dispositif 1 au reste de l'ouvrant. Avantageusement, les éléments de fixation 13 sont prévus sur l'interface de liaison 17 ou entre les premier et deuxième enjoliveurs. De préférence, on répartit les éléments de fixation 13 sorte à ne pas endommager le dispositif 1 lors de son démontage.

Dans tout ce document, par « enjoliveur », on entend tout élément destiné à recouvrir au moins partiellement un organe ou une partie d'organe de sorte à en modifier l'esthétique, en particulier de sorte à en améliorer l'esthétique. De préférence, la fonction principale ou unique de l'enjoliveur est esthétique. L'enjoliveur peut aussi avoir une fonction d'hygiène ou de sécurité. Avantageusement, l'enjoliveur n'a pas d'autre fonction. En conséquence, l'aspect visuel du dispositif d'enjoliveur peut être optimisé pour atteindre toutes les fonctions esthétiques souhaitées.

Grâce à la solution décrite plus haut, le montage de l'ouvrant est simplifié. En effet, une seule pièce d'enjoliveur est montée sur l'ouvrant pour masquer la serrure et le système de fixation. La logistique est aussi simplifiée, une seule référence de pièce devant être gérée.

## Revendications

1. Ouvrant (100), notamment hayon arrière (100), pour un véhicule automobile, comprenant un premier élément (31) d'ouvrant, un deuxième élément (32) d'ouvrant, et un dispositif (1) d'enjoliveur pour ouvrant (100) de véhicule automobile, le premier élément (31) d'ouvrant étant une pièce de structure de l'ouvrant, notamment un caisson (31) de l'ouvrant, le premier élément (31) étant réalisé en matière plastique de sorte que sa partie inférieure reste visible et constitue ainsi la garniture de l'ouvrant, le deuxième élément (32) d'ouvrant étant une pièce d'habillage de l'ouvrant, notamment un panneau extérieur (32) de l'ouvrant, **caractérisé en ce que** le dispositif d'enjoliveur comprenant un premier enjoliveur (11) pour une serrure (21) de l'ouvrant et un deuxième enjoliveur (12) pour un système de fixation (22) du premier élément (31) d'ouvrant au deuxième élément (32) d'ouvrant, le premier enjoliveur et le deuxième enjoliveur formant une seule et même pièce.

2. Ouvrant selon la revendication précédente, **caractérisé en ce que** le dispositif d'enjoliveur est réalisé par injection et/ou **en ce qu'**il est réalisé en matière plastique ou en matière composite.

3. Ouvrant selon la revendication 1 ou 2, **caractérisé en ce que** le dispositif d'enjoliveur comprend des éléments de fixation (13), notamment des clips de fixation.

4. Ouvrant selon l'une des revendications précédentes, **caractérisé en ce que** le premier enjoliveur a une forme globale de parallélépipède creux (14) muni d'une fente (15) et/ou **en ce que** le deuxième enjoliveur a une forme globale de réglette (16).

5. Ouvrant selon l'une des revendications précédentes, **caractérisé en ce que** le dispositif d'enjoliveur comprend une interface (17), notamment une interface plane ou sensiblement plane, de liaison mécanique du premier enjoliveur au deuxième enjoliveur.

6. Ouvrant (100) selon l'une quelconque des revendications précédentes, **caractérisé en ce que** le premier élément (31) d'ouvrant présente une zone en creux (33) destinée à recevoir le dispositif d'enjoliveur.

7. Caisse (200) pour véhicule automobile comprenant un ouvrant selon l'une quelconque des revendications 1 à 6.

8. Véhicule (300), notamment véhicule automobile, comprenant une caisse selon la revendication 7 et/ou un ouvrant selon l'une des revendications 1 à 6.

## Patentansprüche

1. Flügel (100), insbesondere Heckklappe (100), für ein Kraftfahrzeug, umfassend ein erstes Flügelelement (31), ein zweites Flügelelement (32) und eine Zierkappenvorrichtung (1) für den Flügel (100) des Kraftfahrzeugs, wobei das erste Flügelelement (31) ein Strukturteil des Flügels ist, insbesondere ein Korpus (31) des Flügels, wobei das erste Element (31) so aus Kunststoff gefertigt ist, dass sein unterer Teil sichtbar bleibt und auf diese Weise die Blende des Flügels bildet, wobei das zweite Flügelelement (32) ein Verkleidungsteil des Flügels ist, insbesondere eine Außenplatte (32) des Flügels, **dadurch gekennzeichnet, dass** die Zierkappenvorrichtung eine erste Zierkappe (11) für ein Schloss (21) des Flügels und eine zweite Zierkappe (12) für ein System (22) zur Befestigung des ersten Flügelelements (31) am zweiten Flügelelement (32) umfasst, wobei die erste Zierkappe und die zweite Zierkappe einstückig ausgebildet sind.

2. Flügel nach dem vorangehenden Anspruch, **dadurch gekennzeichnet, dass** die Zierkappenvorrichtung angespritzt ist und/oder dass sie aus Kunststoff oder einem Verbundmaterial gefertigt ist.

3. Flügel nach Anspruch 1 oder 2, **dadurch gekennzeichnet, dass** die Zierkappenvorrichtung Befestigungselemente (13), insbesondere Befestigungsclips, umfasst.

4. Flügel nach einem der vorangehenden Ansprüche, **dadurch gekennzeichnet, dass** die erste Zierkappe eine allgemeine Form eines mit einem Schlitz (15) versehenen hohlen Parallelepipeds (14) aufweist und/oder dass die zweite Zierkappe eine allgemeine Form einer Leiste (16) aufweist.

5. Flügel nach einem der vorangehenden Ansprüche, **dadurch gekennzeichnet, dass** die Zierkappenvorrichtung eine Grenzfläche (17), insbesondere eine ebene oder im Wesentlichen ebene Grenzfläche, zur mechanischen Verbindung der ersten Zierkappe mit der zweiten Zierkappe umfasst.

6. Flügel (100) nach einem der vorangehenden Ansprüche, **dadurch gekennzeichnet, dass** das erste Flügelelement (31) einen hohlen Bereich (33) aufweist, der dazu bestimmt ist, die Zierkappenvorrichtung aufzunehmen.

7. Karosserie (200) für ein Kraftfahrzeug, umfassend einen Flügel nach einem der Ansprüche 1 bis 6.

8. Fahrzeug (300), insbesondere Kraftfahrzeug, umfassend eine Karosserie nach Anspruch 7 und/oder einen Flügel nach einem der Ansprüche 1 bis 6.

## Claims

1. Closure (100), notably a tailgate (100), for a motor vehicle, comprising a first closure element (31), a second closure element (32), and a trim device (1) for a motor vehicle closure (100), the first closure element (31) being a structural part of the closure, notably an inner shell (31) of the closure, the first element (31) being made of plastic material so that its lower part remains visible and thus constitutes the trim of the closure, the second closure element (32) being a finishing part of the closure, notably an outer panel (32) of the closure, **characterized in that** the trim device comprises a first trim element (11) for a lock (21) of the closure and a second trim element (12) for a system (22) for fastening the first closure element (31) to the second closure element (32), the first trim element and the second trim element forming a single part.

2. Closure according to the preceding claim, **characterized in that** the trim device is made by injection moulding and/or **in that** it is made of plastic or composite material.

3. Closure according to Claim 1 or 2, **characterized in that** the trim device comprises fastening elements (13), notably fastening clips.

4. Closure according to one of the preceding claims, **characterized in that** the overall shape of the first trim element is a hollow parallelepiped (14) provided with a slot (15) and/or **in that** the overall shape of the second trim element is a strip (16).

5. Closure according to one of the preceding claims, **characterized in that** the trim device comprises an interface (17), notably a flat or substantially flat interface, for mechanically connecting the first trim element to the second trim element.

6. Closure (100) according to any one of the preceding claims, **characterized in that** the first closure element (31) has a recessed zone (33) intended to receive the trim device.

7. Motor vehicle body (200) comprising a closure according to any one of Claims 1 to 6.

8. Vehicle (300), notably a motor vehicle, comprising a body according to Claim 7 and/or a closure according to one of Claims 1 to 6.
